Europäisches Patentamt

European Patent Office

Office européen des brevets

(11) Publication number: **0 177 956**
**B1**

# EUROPEAN PATENT SPECIFICATION

(45) Date of publication of patent specification: **19.04.89**

(21) Application number: **85112850.4**

(22) Date of filing: **10.10.85**

(51) Int. Cl.⁴: **C 08 F 214/06, C 08 F 2/38 //
(C08F214/06, 218:10)**

(54) Low molecular weight vinyl halide/vinyl ester copolymers by aqueous polymerization.

(30) Priority: **12.10.84 US 660180**

(43) Date of publication of application:
**16.04.86 Bulletin 86/16**

(45) Publication of the grant of the patent:
**19.04.89 Bulletin 89/16**

(84) Designated Contracting States:
**BE DE FR GB IT NL SE**

(56) References cited:
GB-A- 967 895
US-A-4 189 552

**INDUSTRIAL AND ENGINEERING CHEMISTRY,
vol. 47, no. 3, March 1955, pages 472-480; W.S.
PORT et al.: "Polymerizable derivatives of
long-chain fatty acids"**

(73) Proprietor: **The B.F. GOODRICH Company
Dept. 0015 WHB-6 500 South Main Street
Akron, Ohio 44318 (US)**

(72) Inventor: **Sharaby, Zaev
3391 Altamont Avenue
Cleveland Heights Ohio 44118 (US)**

(74) Representative: **von Kreisler, Alek, Dipl.-Chem.
et al
Deichmannhaus am Hauptbahnhof
D-5000 Köln 1 (DE)**

Courier Press, Leamington Spa, England.

## Description

Background of the invention

Much work has been done to make internally plasticized and internally stabilized polyvinyl chloride (PVC) by employing copolymerizable lubricants and stabilizers. Copolymers of vinyl chloride and vinyl stearate were extensively studied with the aim of making internally plasticized PVC via the incorporation of vinyl stearate at levels of about 10 to 50% by weight. Vinyl chloride/vinyl stearate copolymers with very low levels of vinyl stearate were not reported and were of no commercial interest, because at such low levels of vinyl stearate the copolymers' mechanical properties were thought to be not much different than those of the PVC homopolymer.

Copolymers of vinyl chloride with vinyl stearate are well established in the literature. The mechanical properties of suspension copolymers of vinyl chloride with vinyl esters of long chain fatty acids, such as vinyl stearate, are discussed by W. S. Port. E. F. Jordan, Jr., W. E. Palm, L. P. Witnauer, J. E. Hansen and D. Swern; *Industrial and Engineering Chemistry*, Vol. 47, pp. 472—480 (1955). Homopolymers, copolymers and terpolymers of allyl stearate/vinyl stearate/vinyl chloride are discussed by E. F. Jordan, Jr., G. R. Riser, B. Artymshyn, S. Smith, Jr. and A. N. Wrigley; *Journal of Polymer Science*: Polymer Chemistry Edition, Vol. 11, pp. 1475—1504 (1973). U.S. Patent #2,993,034 discloses copolymers of vinyl chloride and vinyl epoxy stearate.

The demand for specialty polyvinyl chloride resin for use in custom injection molding (CIM) applications initiated research for PVC resins having high melt flow and low molecular weight, without any corresponding adverse effects on heat stability, heat distortion and related properties. The use of low levels of vinyl esters of fatty acids as a copolymer for PVC substantially improves the melt flow properties, but there is a further need to reduce the molecular weight of the polymer. The molecular weight reduction is accomplished through the practice of this invention by the use of a mercapto compound as a chain transfer agent.

One of the most efficient chain transfer agents in the family of mercaptans is 2-mercaptoethanol. It is more effective than other conventional chlorinated chain transfer agents, such as trichloroethylene, U.S. Patent #4,189,552 discloses the use of 2-mercaptoethanol in the suspension polymerization of vinyl chloride with 2-mercaptoethanol levels of 0.001 to 0.50 parts per 100 parts of monomer. The '552 patent teaches that the introduction of the mercapto compounds into the reaction medium at a time when the monomer conversion is lower than 1% produces adverse effects on particle characteristics. Because of the detrimental effects that mercapto compounds have on colloidal stability, the '552 patent instructs that the mercapto compounds should be introduced by divided addition during the polymerization. In essence, 2-mercaptoethanol at levels greater than 0.03 parts per 100 parts monomer, charged before the onset of the polymerization, is likely to cause an unacceptable coarse or solid charge.

It has been surprisingly discovered that the copolymerization of vinyl chloride and vinyl esters of fatty acids can be carried out with as much as 1.50 parts of a water soluble mercaptan per 100 parts monomer without loss of colloidal stability. The use of vinyl esters of fatty acids eliminated the adverse effects of the mercaptans via a proposed encapsulation effect when the mercaptans were premixed with the vinyl esters.

The present invention relates to a method for the aqueous copolymerization of vinyl or vinylidene halides with about 1 to 10% by weight of vinyl esters of fatty acids. The polymerization is carried out using a mercaptan as a chain transfer agent, wherein the mercaptan is admixed with the vinyl ester, and may be charged to the reaction vessel prior to the start of polymerization. This novel process yields a copolymer having a low molecular weight, improved melt flow properties, and good particle characteristics. The polymer product finds particular utility in custom injection molding applications.

Summary of the invention

This invention relates to a process for the production of copolymers of vinyl or vinylidene halides and vinyl esters of fatty acids having low molecular weights, improved melt flow, and good particle characteristics. The process comprises the aqueous copolymerization of vinyl or vinylidene halides with from about 1% to about 10% by weight of vinyl esters of fatty acids, and utilizing from about 0.03 to about 1.50 parts by weight of a water soluble mercaptan or a non-water soluble mercaptan per 100 parts monomer as a chain transfer agent. Excellent colloidal stability is obtained when the mercaptan is admixed with the vinyl ester, and even when charged to the reaction medium prior to the start of polymerization. The use of the mercaptan in conjunction with vinyl esters of fatty acids enables the production of low molecular weight copolymers having an inherent solution viscosity of about 0.25 to about 0.55, and an average particle size of about 80 to about 125 μm.

Detailed description of the invention

In the practice of this invention copolymers of vinyl or vinylidene halides and vinyl esters of fatty acids of relatively low molecular weight are prepared by aqueous polymerization utilizing a water soluble mercaptan or a non-water soluble mercaptan as a chain transfer agent. While the present invention is specifically illustrated hereinafter with regard to the suspension polymerization of vinyl chloride, it is to be understood that the process may likewise be applied to the aqueous suspension, microsuspension or emulsion polymerization of any polymerizable vinyl or vinylidene halides, such as vinyl bromide,

2

vinylidene chloride, and any other vinylidene halides having at least one terminal $CH_2=C<$ group. The vinyl halides and vinylidene halides may be copolymerized with each other or with one or more other vinylidene monomers. Examples of such vinylidene monomers are the $\alpha,\beta$-olefinically unsaturated carboxylic acids, such as acrylic acid, methacrylic acid, ethacrylic acid, $\alpha$-cyanoacrylic acid and the like; esters of acrylic acid, such as methyl acrylate, ethyl acrylate, butyl acrylate, octyl acrylate, cyanoethyl acrylate and the like; esters of methacrylic acid; nitriles, such as acrylonitrile and methacrylonitrile; acrylamides, such as methyl acrylamide, N-methylol acrylamide, N-butoxy methacrylamide, and the like; vinyl ethers, such as ethylvinyl ether, chloroethyl vinyl ether, and the like; the vinyl ketones, styrene and styrene derivatives, including $\alpha$-methyl styrene, vinyl naphthalene, allyl and vinyl chloroacetate, vinyl acetate, vinyl pyridine, methyl vinyl ketone; and other vinylidene monomers of the types known to those skilled in the art.

The primary objective of this invention is to produce vinyl halides/vinyl esters of fatty acid copolymers having a low molecular weight, improved melt flow, and good particle size and particle size distribution. The copolymers of the present invention ideally have an average particle size of about 80 to about 125 μm. The average particle size of the vinyl resins can be measured by a Sonic Sifter Screen Method following ASTM Procedure, No. D1921—63. The copolymers of this invention have an inherent solution viscosity in the range of about 0.25 to about 0.55. The inherent viscosity represents a measure of the polymeric molecular weight and may be tested following ASTM Procedure No. D-1243.

The process of this invention involves the copolymerization of vinyl or vinylidene halides with from about 1% to about 10% by weight of vinyl esters of fatty acids. Suitable vinyl esters are those having from 5 to 26 carbons, preferably from 12 to 16 carbons in the chain. The most preferable vinyl ester for use in this invention is vinyl stearate. Except for the use of vinyl esters as a comonomer and the use of a mercaptan as a chain transfer agent, the polymerization is much the same as in the conventional polymerization of vinyl chloride in an aqueous medium. Suitable dispersing agents or suspending agents, such as known in the art, may be used. Examples of suitable dispersants are partially hydrolyzed polyvinyl alcohol, cellulose ethers, starch, gelatin and the like. The polymerization initiators used in this process are known in the art and are selected from the conventional monomer-soluble free radical initiators such as organic peroxides and azo compounds. Examples of suitable initiators include lauroyl peroxide, azobisisobutylonitrile, benzoyl peroxide, isopropyldicarbonate, acetyl cyclohexyl sulfonyl peroxide, t-butyl peroxypivalate, t-butyl peroxyacetate, and $\alpha$-cumyl peroxyneodecanoate, depending on the reaction temperature. The preferred initiator is a dual system comprising t-butyl peroxypivalate and $\alpha$-cumyl peroxyneodecanate. This initiator system results in a reduced residual initiator level in the final product and a shorter high temperature history due to faster reactions.

Other polymerization conditions such as the polymerization temperature and polymerization time and the like are not critical, and can be determined by those skilled in the art as in the conventional polymerization of vinyl chloride in an aqueous medium. Preferably the process of this invention is carried out at a polymerization temperature of about 55—80°C.

Two factors are important in producing a high melt flow material for custom injection molding applications; the molecular weight, and the chemical nature of the polymer backbone. The presence of a water soluble marcaptan or a non-water soluble mercaptan as a chain transfer agent controls the molecular weight. The vinyl ester comonomer affects the microstructure of the polymer by modifying the chemical nature of the polymer backbone, and thus reducing crystallinity and tacticity. Suitable mercaptans for the practice of this invention include non-water soluble mercaptans and the water soluble mercaptans such as 2-mercaptoethanol, 3-mercaptopropanol, and the like. The preferred mercaptan for use in the present invention is 2-mercaptoethanol. Acceptable levels of 2-mercaptoethanol for the practice of the present invention range from about 0.03 to about 1.50 parts by weight per 100 parts monomer, and preferably from 0.20 to 0.50 parts. Because of the detrimental effects that 2-mercaptoethanol has on colloidal stability, it is necessary to admix the 2-mercaptoethanol with the vinyl ester before adding it to the reaction medium. This procedure surprisingly eliminates the adverse effects of 2-mercaptoethanol on colloidial stability. It is believed that the vinyl ester averts the adverse effect of 2-mercaptoethanol on colloidal stability via encapsulation, and, thus, allows relatively high levels of 2-mercaptoethanol to be introduced to the reaction medium prior to the start of polymerization. This method produces white copolymers which have low molecular weights and a minimum of undesirable coarse particles.

To further illustrate the present invention, the following specific examples are given, it being understood that this is merely intended in an illustrative and not a limitative sense. In the examples, all parts and percentages are by weight unless otherwise indicated. In all examples, the polymerization was carried out at a polymerization temperature of about 70°C. The solutions of 2-mercaptoethanol in vinyl esters were charged to the reactors, followed by charging sequentially demineralized water and vinyl chloride.

|  | Examples | | | | | | | | | | | | |
|---|---|---|---|---|---|---|---|---|---|---|---|---|---|
|  | I | II | III | IV | V | VI | VII | VIII | IX | X | XI | XII | XIII |
| **Ingredients** | | | | | | | | | | | | | |
| Vinyl Chloride | 100 | 100 | 100 | 100 | 100 | 100 | 100 | 100 | 100 | 100 | 100 | 100 | 100 |
| Vinyl Stearate | — | 3.7 | 1.25 | 2.5 | 5.0 | 2.5 | 2.5 | 5.0 | 5.0 | 2.5 | 2.5 | — | — |
| Vinyl t-Nonanoate | — | — | — | — | — | — | — | — | — | — | — | 2.5 | — |
| Vinyl Laurate | — | — | — | — | — | — | — | — | — | — | — | — | 2.5 |
| 2-Mercaptoethanol | — | — | 0.20 | 0.20 | 0.20 | 0.30 | 0.03 | 0.03 | 0.50 | 0.75 | 1.50 | 0.5 | 0.5 |
| Hydroxyalkyl Cellulose | 0.10 | 0.10 | 0.08 | 0.08 | 0.08 | 0.08 | 0.08 | 0.08 | 0.08 | 0.15 | 0.15 | 0.15 | 0.15 |
| Polyvinyl Alcohol | 0.10 | 0.10 | 0.08 | 0.08 | 0.08 | 0.08 | 0.08 | 0.08 | 0.08 | 0.10 | 0.10 | 0.10 | 0.10 |
| DM Water (Total) | 185 | 185 | 185 | 185 | 185 | 185 | 185 | 185 | 185 | 186 | 186 | 186 | 186 |
| Initiator | 0.07 | 0.07 | 0.10 | 0.10 | 0.10 | 0.125 | 0.07 | 0.07 | 0.125 | 0.125 | 0.18 | 0.13 | 0.13 |
| **Physical properties** | | | | | | | | | | | | | |
| Inherent Visc. | 0.69 | 0.63 | 0.44 | 0.42 | 0.42 | 0.38 | 0.54 | 0.55 | 0.32 | 0.32 | 0.27 | 0.35 | 0.36 |
| Avg. Particle Size $\mu$m | 119 | 108 | 99 | 92 | 79 | 92 | 88 | 77 | 123 | 82 | 74 | 75 | 87 |
| Relative Melt Flow | 1.00 | 1.93 | 2.49 | 1.76 | 4.57 | 3.19 | 1.10 | 1.47 | 17.3 | — | 25.6 | 6.7 | 6.7 |

## EP 0 177 956 B1

The results in the above examples indicate consistently low inherent viscosity (ergo, low molecular weight) for Examples III—XIII which are encompassed within the scope of the present invention. The present invention also yields copolymers having a good average particle size in the range of about 80 to about 125 µm, and generally having improved melt flow properties.

### Claims

1. A process for the production of low molecular weight copolymers of vinyl or vinylidene halides and vinyl esters of fatty acids by aqueous polymerization, comprising a) the use of from about 1% to about 10% by weight of total number of vinyl esters of fatty acids, having from 5 to 26 carbons in the chain, as a comonomer, and b) the use of from about 0.03 to about 1.50 parts by weight per 100 parts monomer of a water soluble or insoluble mercaptan as a chain transfer agent, wherein the mercaptan is admixed with said vinyl esters before adding it to the polymerization medium.

2. A process of Claim 1 wherein the vinyl halide is vinyl chloride.

3. A process of Claim 1 wherein the vinyl ester is vinyl stearate.

4. A process of Claim 1 wherein the mercaptan is 2-mercaptoethanol.

5. A process of Claim 1 wherein the polymerization is carried out at a temperature of about 55° to 80°C.

6. A process of Claim 1 wherein the mercaptan is added to the polymerization medium prior to the start of the polymerization reaction.

7. A process of Claim 1 wherein the copolymers have an inherent solution viscosity of about 0.25 to about 0.55.

8. Low molecular weight copolymers of vinyl or vinylidene halides and vinyl esters of fatty acid containing from about 1% to about 10% by weight of said vinyl ester of fatty acids having from 5 to 26 carbons in the chain, wherein said copolymers are obtainable by aqueous polymerization using from about 0.03 to about 1.50 parts by weight per 100 parts monomer of a water soluble or insoluble mercaptan which is admixed with said vinyl esters before adding it to the polymerization medium.

9. Copolymers of Claim 8 wherein the vinyl halide is vinyl chloride and the vinyl ester is vinyl stearate.

10. Copolymers of Claim 9 wherein the mercaptan is 2-mercaptoethanol.

11. Copolymers of Claim 8 wherein the polymerizaton is carried out at a temperature of about 55 to 80°C.

### Patentansprüche

1. Verfahren zur Herstellung niedermolekularer Copolymerer aus Vinyl- oder Vinylidenhalogeniden und Vinylestern von Fettsäuren durch wäßrige Polymerisation, umfassend

a) die Verwendung von etwa 1 bis 10 Gew.-% der Gesamtmenge der Monomeren an Vinylestern von Fettsäuren mit 5 bis 26 Kohlenstoffen in der Kette als Comonomer und

b) die Verwendung von etwa 0,03 bis etwa 1,50 Gew.- Teilen, auf 100 Teile Monomer, eines wasserlöslichen oder -unlöslichen Mercaptans als Kettenübertragungsmittel,

wobei das Mercaptan mit den Vinylestern vermischt wird, bevor es dem Polymerisationsmedium zugesetzt wird.

2. Verfahren nach Anspruch 1, worin das Vinylhalogenid Vinylchlorid ist.

3. Verfahren nach Anspruch 1, worin der Vinylester Vinylstearat ist.

4. Verfahren nach Anspruch 1, worin das Mercaptan 2-Mercaptoethanol ist.

5. Verfahren nach Anspruch 1, worin die Polymerisation bei einer Temperatur von etwa 55°C bis etwa 80°C durchgeführt wird.

6. Verfahren nach Anspruch 1, worin das Mercaptan dem Polymerisationsmedium vor dem Beginn der Polymerisationsreaktion zugesetzt wird.

7. Verfahren nach Anspruch 1, worin die Copolymeren eine logarithmische Viskositätszahl von etwa 0,25 bis etwa 0,55 haben.

8. Niedermolekulare Copolymere aus Vinyl- oder Vinylidenhalogeniden und Vinylestern von Fettsäuren, die etwa 1 bis 10 Gew.-% der genannten Vinylester von Fettsäuren mit 5 bis 26 Kohlenstoffen in der Kette enthalten, wobei diese Copolymeren durch wäßrige Polymerisation, unter Verwendung von etwa 0,03 bis etwa 1,50 Gew.-Teilen, auf 100 Teile Monomer, eines wasserlöslichen oder -unlöslichen Mercaptans erhältlich sind, das mit den Vinylestern vermischt wird, bevor es dem Polymerisationsmedium zugesetzt wird.

9. Copolymere nach Anspruch 8, worin das Vinylhalogenid Vinylchlorid ist und der Vinylester Vinylstearat ist.

10. Copolymere nach Anspruch 9, worin das Mercaptan 2-Mercaptoethanol ist.

11. Copolymere nach Anspruch 8, wobei die Polymerisation bei einer Temperatur von etwa 95°C bis 80°C durchgeführt wird.

### Revendications

1. Procédé pour la production de copolymères, à bas poids moléculaire, d'halogénures de vinyle ou de vinylidène et d'esters vinyliques d'acides gras, par polymérisation en phase aqueuse, consistant a) à utiliser en tant que comonomère d'environ 1 à environ 10% en poids, par rapport au total des monomères, d'esters vinyliques d'acides gras, comportant dans leur chaîne de 5 à 26 atomes de carbone, et b) à utiliser en tant qu'agent de transfert de chaîne d'environ 0,03 à environ 1,50 parties en poids, pour 100 parties de monomère, d'un mercaptan soluble ou insoluble dans l'eau, procédé dans lequel le mercaptan est mélangé auxdits esters vinyliques avant son addition au milieu de polymérisation.

2. Procédé selon la revendication 1, dans lequel l'halogénure de vinyle est le chlorure de vinyle.

3. Procédé selon la revendication 1, dans lequel l'ester vinylique est le stéarate de vinyle.

4. Procédé selon la revendication 1, dans lequel le mercaptan est le 2-mercaptoéthanol.

5. Procédé selon la revendication 1, dans lequel la polymérisation est mise en oeuvre à une température d'environ 55 à 80°C.

6. Procédé selon la revendication 1, dans lequel le mercaptan est ajouté au milieu de polymérisation avant le début de la réaction de polymérisation.

7. Procédé selon la revendication 1, dans lequel les copolymères ont une viscosité intrinsèque en solution d'environ 0,25 à environ 0,55.

8. Copolymères à bas poids moléculaire d'halogénures de vinyle ou de vinylidène et d'esters vinyliques d'acides gras, contenant d'environ 1 à environ 10% en poids dudit ester vinylique d'acides gras ayant de 5 à 26 atomes de carbone dans leur chaîne, où lesdits copolymères peuvent être obtenus par polymérisation en phase aqueuse par l'utilisation d'environ 0,03 à environ 1,50 parties en poids, pour 100 parties de monomère, d'un mercaptan soluble ou insoluble dans l'eau, lequel est mélangé auxdits esters vinyliques avant son addition au milieu de polymérisation.

9. Copolymères selon la revendication 8, dans lesquels l'halogénure de vinyle est le chlorure de vinyle et l'ester vinylique est le stéarate de vinyle.

10. Copolymères selon la revendication 9, dans lesquels le mercaptan est le 2-mercaptoéthanol.

11. Copolymères selon la revendication 8, dans lesquels la polymérisation est mise en oeuvre à une température d'environ 55 à 80°C.